Europäisches Patentamt

(19) European Patent Office

Office européen des brevets

(11) **EP 0 949 530 A1**

## (12) DEMANDE DE BREVET EUROPEEN

(43) Date de publication:
**13.10.1999 Bulletin 1999/41**

(51) Int. Cl.⁶: **G02C 7/04**

(21) Numéro de dépôt: **99400802.7**

(22) Date de dépôt: **01.04.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **07.04.1998 FR 9804291**

(71) Demandeur:
**ESSILOR INTERNATIONAL
Compagnie Générale d'Optique
F-94220 Charenton le Pont (FR)**

(72) Inventeurs:
- **Chateau, Nicolas
  75013 Paris (FR)**
- **Legras, Richard
  92350 Le Plessis Robinson (FR)**
- **Baude, Dominique
  93400 Saint Ouen (FR)**

(74) Mandataire:
**CABINET BONNET-THIRION
12, Avenue de la Grande-Armée
75017 Paris (FR)**

(54) **Procédé d'elaboration de repère de tolérance angulaire pour lentille corrigeant l'astigmatisme, et lentille associée**

(57)    Le procédé pour l'élaboration d'un repère de tolérance à rapporter sur une lentille de contact, qui, pour une correction d'astigmatisme, présente un cylindre donné, est du genre suivant lequel on forme le repère de tolérance à partir d'au moins deux segments de droite qui, faisant un angle entre eux, sont à disposer à la partie périphérique d'une telle lentille de contact, et est d'une manière générale caractérisé en ce que l'on fait dépendre du cylindre de la lentille de contact, l'angle que font entre eux les deux segments de droite du repère de tolérance.

*Fig. 4*

EP 0 949 530 A1

Printed by Xerox (UK) Business Services
2.16.7/3.6

**Description**

L'invention relève généralement du domaine des lentilles de contact. Plus particulièrement, elle concerne les lentilles qui ne possèdent pas de symétrie de révolution, telles que les lentilles destinées à la correction d'astigmatisme. Encore plus précisément, elle concerne un procédé de repérage de tolérance angulaire pour faciliter la mise en place de telles lentilles.

Les lentilles de contact destinées à corriger l'astigmatisme présentent la particularité d'avoir au moins une de leurs faces dépourvue de symétrie de révolution autour de leur axe. En conséquence, elles doivent être placées sur l'oeil du porteur dans une position angulaire correcte, faute de quoi la correction de vision est imparfaite.

De façon classique, les lentilles de correction d'astigmatisme présentent alors à leur partie périphérique, non optiquement utile, des symboles permettant au clinicien de vérifier la bonne orientation de la lentille sur l'oeil. Ces symboles incluent des repères angulaires permettant d'évaluer l'erreur de positionnement et éventuellement de la comparer à une tolérance autour de la position optimale de la lentille, tolérance supposée connue par ailleurs.

L'invention vise quant-à-elle un nouveau procédé d'élaboration d'un repère de tolérance angulaire spécifique à chaque lentille, tenant compte de ce que la tolérance angulaire acceptable dépend du cylindre de la lentille. Cette lentille pouvant, en plus de la correction de l'astigmatisme, comporter tout autre type de correction. Selon un second objectif, l'invention permet alors de déterminer directement si la position angulaire de la lentille est dans le domaine tolérable ou non. L'invention a également pour objectif un gain de temps et de facilité de travail pour le clinicien. L'invention est utilisable sur tout type de lentille de correction d'astigmatisme, ce qui en constitue un autre aspect.

L'invention propose à cet effet un procédé pour l'élaboration d'un repère de tolérance à rapporter sur une lentille de contact, qui, pour une correction d'astigmatisme, présente un cylindre donné, ce procédé étant du genre suivant lequel on forme le repère de tolérance à partir d'au moins deux segments de droite qui, faisant un angle entre eux, sont à disposer à la partie périphérique d'une telle lentille de contact, et étant d'une manière générale caractérisé en ce que l'on fait dépendre du cylindre de la lentille de contact, l'angle que font entre eux les deux segments de droite du repère de tolérance.

Selon une mise en oeuvre particulière, le demi-angle $\alpha_T$ que font entre eux les deux segments de droite du repère de tolérance répond à la formule suivante :

$$\alpha_T = \arcsin\left[\frac{22,15 - \sqrt{(490,6 - P_T)}}{2C}\right]$$

dans laquelle :

$C$ est le cylindre, exprimé en dioptries,
et $P_T$ est un seuil de diminution de l'activité visuelle à respecter, exprimé en pourcentage, et compris entre 10% et 50%.

Préférentiellement, la loi d'évolution donnant les valeurs du seuil de dégradation $P_T$ en fonction de celles du cylindre à corriger $C$ a une représentation comprise entre deux courbes enveloppes définies par les deux équations suivantes :

$$P_T = \frac{-11,5}{C} + 34$$

$$P_T = \frac{-14,3}{C} + 42 + 4C$$

Selon une mise en oeuvre encore plus particulière, la loi d'évolution du seuil de dégradation $P_T$ en fonction du cylindre à corriger $C$ est conforme à l'équation suivante :

$$P_T = \frac{-12,7}{C} + 38 + 1,6C$$

L'invention vise également une lentille de contact pour astigmate du genre comportant une zone centrale optiquement utile, dont l'une au moins des surfaces est dépourvue de symétrie de révolution autour de son axe, et une zone périphérique, avec, dans cette zone périphérique, au moins un repère de tolérance obtenu selon un procédé conforme à l'exposé précédent.

L'invention vise plus généralement une série de lentilles du genre comportant chacune un repère de tolérance comportant au moins deux segments de droite, caractérisée en ce que, d'une lentille à l'autre, l'angle de ces segments de droite varie avec le cylindre.

La description et le dessin d'un mode préféré de réalisation de l'invention, donnés ci-après, permettront de mieux comprendre les buts et avantages de l'invention. Il est clair que cette description est donnée à titre d'exemple, et n'a pas de caractère limitatif. Dans les dessins :

- la figure 1 représente l'écart angulaire limite en fonction du cylindre à corriger pour différents seuils de dégradation, dans le cas de seuil de dégradation fixe ;
- la figure 2 représente la loi d'évolution préférée du seuil de dégradation en fonction du cylindre à corriger, et les deux courbes enveloppes de cette loi d'évolution ;
- la figure 3 représente l'écart angulaire limite en fonction du cylindre à corriger, dans la cas d'un seuil de dégradation variable, et les deux courbes enveloppes de cet écart angulaire ;

- la figure 4 représente une lentille comportant un repère de tolérance angulaire, vue de face ;
- la figure 5 illustre des variantes de type de repère ;
- la figure 6 représente des lentilles comportant des variantes de repères ;
- la figure 7 montre plusieurs dispositions de repère sur la périphérie d'une lentille de contact.

De façon classique, une lentille de contact pour corriger un défaut d'astigmatisme comporte une zone centrale optiquement utile, dont l'une au moins des faces ne présente pas de symétrie de révolution autour de son axe optique, et une zone périphérique sur laquelle sont éventuellement disposés des symboles de positionnement angulaire.

Lors du positionnement de la lentille de contact sur l'oeil, un défaut d'orientation angulaire (dans le plan perpendiculaire à l'axe optique) conduit, comme on l'a vu, à une correction imparfaite de l'astigmatisme, qui se manifeste par un astigmatisme résiduel responsable d'une baisse d'acuité visuelle. Le cylindre d'astigmatisme résiduel, appelé cylindre résiduel, est d'autant plus grand que le cylindre d'astigmatisme à corriger est grand et que le défaut d'orientation est important. Un même défaut d'orientation (nommé ci-après écart angulaire) dégrade plus fortement l'acuité visuelle si l'astigmatisme à corriger est plus important. La tolérance à respecter sur l'orientation de la lentille devient donc plus sévère lorsque le cylindre à corriger augmente.

De façon théorique, le cylindre résiduel $R$ peut s'exprimer en fonction du cylindre à corriger $C$ et de l'écart angulaire $\alpha$ suivant une relation (voir le document de W.A. Douthwaite : Contact Lens optics and design, 2$^{nd}$ ed. Butterworth-Heinemann, Oxford 1995) :

$$R = 2\ C\ \sin(\alpha)$$

La baisse d'acuité visuelle induite par le cylindre résiduel $R$, exprimée sous la forme d'un pourcentage de diminution $P$ positif (voir : C. Fauquier, T. Bonnin, C. Miège, E. Roland, Influence of combined power error and astigmatism on visual acuity, dans Vision Science and its Applications, OSA Technical Digest Series1995, SaE6(1995)) peut être modélisée sous la forme

$$P = 44,3\ R - R^2$$

avec $R$ en dioptries.

Il est envisageable de tolérer une dégradation de l'acuité visuelle limitée à un certain seuil de dégradation $P_T$, et il est alors possible de déterminer selon le cylindre à corriger $C$ l'écart angulaire limite $\alpha_T$ de la lentille par une relation issue des deux précédentes :

$$\alpha_T = \arcsin\left[\frac{22,15 - \sqrt{(490,6 - P_T)}}{2C}\right]$$

avec $C$ exprimé en dioptries, et $P_T$ exprimé en pourcentage.

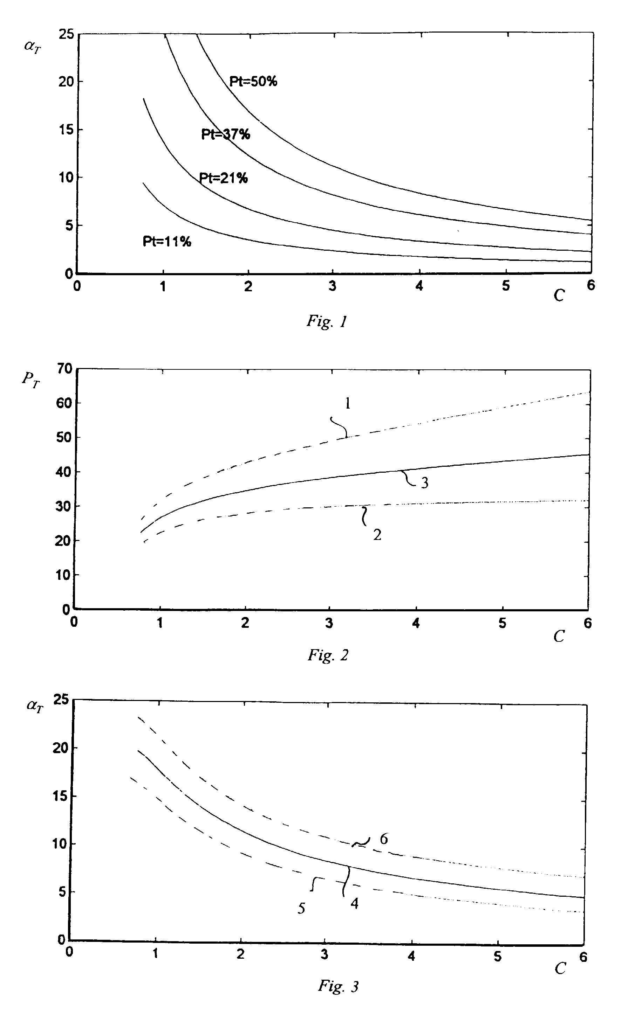

Lorsque le seuil de dégradation $P_T$ est considéré indépendant du cylindre à corriger, ce seuil de dégradation $P_T$ prend une valeur fixe, par exemple comprise entre 10 et 50%. La figure 1 montre alors, pour des valeurs de ce seuil de dégradation $P_T$ valant respectivement 11%, 21%, 37% et 50%, la dépendance de l'écart angulaire limite $\alpha_T$ en fonction du cylindre à corriger $C$. On constate un écart angulaire limite $\alpha_T$ très faible, de l'ordre de quelques degrés, pour des cylindres importants (5 dioptries et plus). Un tel écart angulaire limite $\alpha_T$ est très difficile à tenir, aussi, en pratique, pour les forts astigmatismes, on tolérera un écart angulaire un peu supérieur.

En conséquence, il est possible d'utiliser une valeur du seuil de dégradation $P_T$ croissante en fonction du cylindre à corriger $C$. Dans la réalisation décrite ici à titre d'exemple non limitatif, la loi mathématique donnant les valeurs du seuil de dégradation $P_T$ en fonction de celles du cylindre à corriger $C$ a une représentation comprise entre deux courbes enveloppes définies par les deux équations suivantes :

$$P_T = \frac{-11,5}{C} + 34$$

$$P_T = \frac{-14,3}{C} + 42 + 4C$$

Ces deux courbes enveloppes 1, 2, sont représentées sur la figure 2.

De façon préférée, la loi d'évolution du seuil de dégradation $P_T$ en fonction du cylindre à corriger $C$ sera conforme à la formule suivante :

$$P_T = \frac{-12,7}{C} + 38 + 1,6C$$

Cette loi est représentée sur la figure 2 par la courbe 3, comprise entre les deux courbes enveloppes 1. 2.

L'écart angulaire limite $\alpha_T$ de la lentille s'écrit alors :

$$\alpha_T = \arcsin\left[\frac{22,15 - \sqrt{(490,6 - (\frac{-12,7}{C} + 38 + 1,6C))}}{2C}\right]$$

avec $C$ exprimé en dioptries.

Cette fonction est représentée sur la figure 3 par la courbe 4. Les courbes enveloppes d'écart angulaire s'obtiennent de façon identique en reportant dans l'équation d'expression de l'écart angulaire limite $\alpha_T$ les expressions du seuil d'évolution $P_T$ correspondant aux deux courbes enveloppes de seuil de dégradation 1, 2. Les courbes enveloppes d'écart angulaire sont représentées sur la figure 3 par les courbes 5, 6.

Il est alors possible, pour chaque valeur du cylindre à corriger $C$, de déterminer l'écart angulaire limite $\alpha_T$.

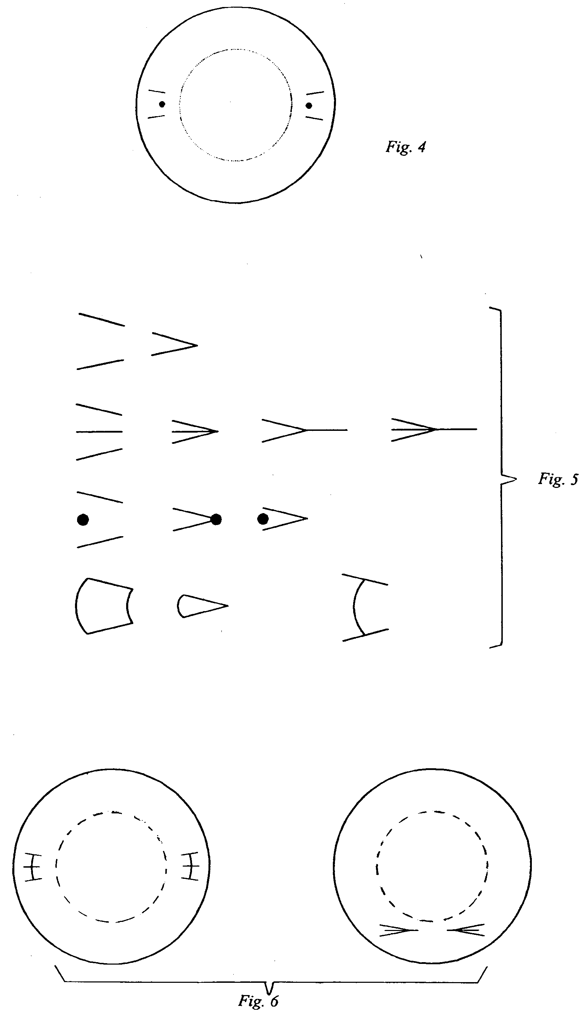

Un repère de tolérance angulaire composé de deux segments de droite angulairement distants de $2\alpha_T$ est réalisé sur la zone périphérique de la lentille, le repère de tolérance étant disposé autour d'un axe correspondant à l'axe horizontal ou vertical théorique de la lentille. Préférentiellement, deux repères symétriques sont disposés en des endroits diamétralement opposés de la lentille. La figure 4 montre une telle disposition comportant également deux repères ponctuels matérialisant l'axe horizontal théorique de la lentille.

Le marquage, compatible avec les types de lentilles classiques, est réalisé sur la lentille d'une manière connue de l'homme de l'art, par fraisage, gravure, estampage, laser excimer, coloration ou toute autre méthode classique.

De nombreuses variantes de type de repère de tolérance angulaire peuvent être réalisés en conservant le même angle caractéristique, avec éventuellement un segment rectiligne médian aux deux autres segments, ou avec des arcs de cercles reliant les segments. Des exemples de tels repères sont illustrés sur la figure 5, et des lentilles complètes comportant des variantes de repères de tolérance angulaire sont schématisées figure 6.

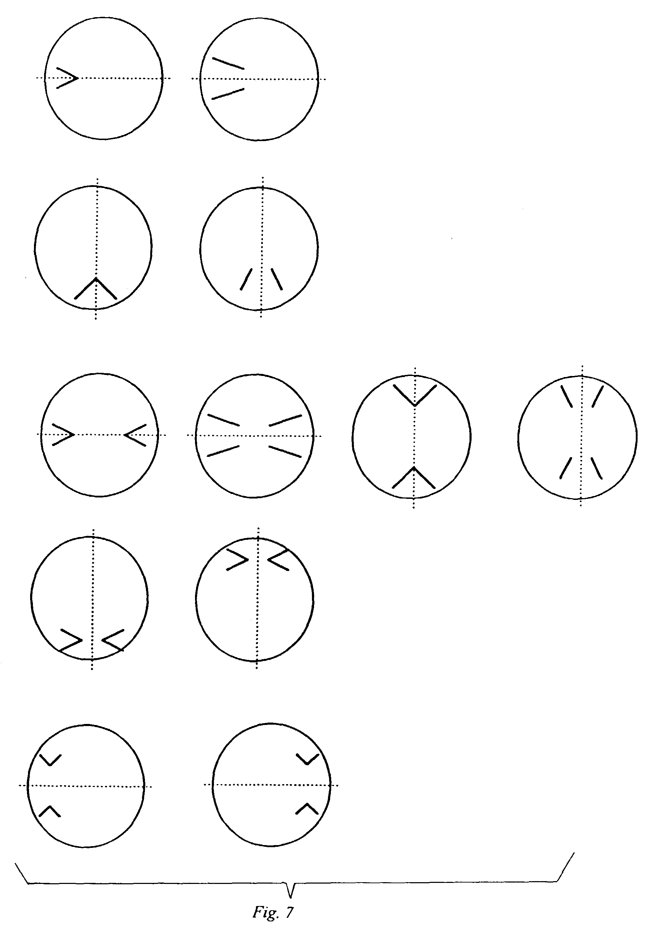

De même, de nombreuses variantes de disposition de repère sur la zone périphérique de la lentille sont réalisables par le même procédé, et une série de ces dispositions est illustrée sur la figure 7.

La portée de la présente invention ne se limite pas aux détails des formes de réalisation ci-dessus considérées à titre d'exemple, mais s'étend au contraire aux modifications à la portée de l'homme de l'art.

## Revendications

1. Procédé pour l'élaboration d'un repère de tolérance à rapporter sur une lentille de contact, qui, pour une correction d'astigmatisme, présente un cylindre donné, ce procédé étant du genre suivant lequel on forme le repère de tolérance à partir d'au moins deux segments de droite qui, faisant un angle $2\alpha_T$ entre eux, sont à disposer à la partie périphérique d'une telle lentille de contact, et étant d'une manière générale caractérisé en ce que l'on fait dépendre du cylindre $C$ de la lentille de contact, l'angle $2\alpha_T$ que font entre eux les deux segments de droite du repère de tolérance.

2. Procédé selon la revendication 1, caractérisé en ce que le demi-angle $\alpha_T$ que font entre eux les deux segments de droite du repère de tolérance répond à la formule suivante :

$$\alpha_T = \arcsin\left[\frac{22,15 - \sqrt{(490,6 - P_T)}}{2C}\right]$$

dans laquelle :

$C$ est le cylindre, exprimé en dioptries, et $P_T$ est un seuil de diminution de l'activité visuelle à respecter, exprimé en pourcentage, et compris entre 10% et 50%.

3. Procédé selon la revendication 1, caractérisé en ce que le demi-angle $\alpha_T$ que font entre eux les deux segments de droite du repère de tolérance répond à la formule suivante :

$$\alpha_T = \arcsin\left[\frac{22,15 - \sqrt{(490,6 - P_T)}}{2C}\right]$$

dans laquelle :

$C$ est le cylindre, exprimé en dioptries, la loi d'évolution donnant les valeurs du seuil de dégradation $P_T$ en fonction de celles du cylindre à corriger $C$ a une représentation comprise entre deux courbes enveloppes définies par les deux équations suivantes :

$$P_T = \frac{-11,5}{C} + 34$$

$$P_T = \frac{-14,3}{C} + 42 + 4C$$

4. Procédé selon la revendication 3, caractérisé en ce que la loi d'évolution du seuil de dégradation $P_T$ en fonction du cylindre à corriger $C$ est conforme à l'équation suivante :

$$P_T = \frac{-12,7}{C} + 38 + 1,6C$$

5. Lentille de contact pour astigmate du genre comportant une zone centrale optiquement utile, dont l'une au moins des surfaces est dépourvue de symétrie de révolution autour de son axe, et une zone périphérique, avec, dans cette zone périphérique, au moins un repère de tolérance obtenu selon un procédé conforme à l'une des revendications 1 à 4.

6. Série de lentilles du genre comportant chacune un repère de tolérance comportant au moins deux segments de droite, caractérisée en ce que, d'une lentille à l'autre, l'angle de ces segments de droite varie avec le cylindre à corriger C.

7. Série de lentilles selon la revendication 6, caractérisée en ce que, d'une lentille à l'autre, l'angle des segments de droite diminue lorsque le cylindre à corriger C augmente.

8. Série de lentilles selon la revendication 7, caractérisée en ce que le demi-angle $\alpha_T$ que font entre eux les deux segments de droite du repère de tolérance répond à la formule suivante :

$$\alpha_T = \arcsin\left[\frac{22,15 - \sqrt{(490,6 - P_T)}}{2C}\right]$$

dans laquelle :

$C$ est le cylindre, exprimé en dioptries,
et $P_T$ est un seuil de diminution de l'activité visuelle à respecter, exprimé en pourcentage, et compris entre 10% et 50%.

9. Série de lentilles selon la revendication 7, caractérisée en ce que le demi-angle $\alpha_T$ que font entre eux les deux segments de droite du repère de tolérance répond à la formule suivante :

$$\alpha_T = \arcsin DF > \left[\frac{22,15 - \sqrt{(490,6 - P_T)}}{2C}\right]$$

dans laquelle :

$C$ est le cylindre, exprimé en dioptries,
la loi d'évolution donnant les valeurs du seuil de dégradation $P_T$ en fonction de celles du cylindre à corriger $C$ a une représentation comprise entre deux courbes enveloppes définies par les deux équations suivantes :

$$P_T = \frac{-11,5}{C} + 34$$

$$P_T = \frac{-14,3}{C} + 42 + 4C$$

10. Série de lentilles selon la revendication 9, caractérisée en ce que la loi d'évolution du seuil de dégradation $P_T$ en fonction du cylindre à corriger $C$ est conforme à l'équation suivante :

$$P_T = \frac{-12,7}{C} + 38 + 1,6C$$

11. Lentille de contact pour astigmate du genre comportant une zone centrale optiquement utile, dont l'une au moins des surfaces est dépourvue de symétrie de révolution autour de son axe, et une zone périphérique, caractérisée en ce qu'elle fait partie d'une série de lentilles conforme à l'une des revendications 6 à 10.

Fig. 1

Fig. 2

Fig. 3

*Fig. 4*

*Fig. 5*

*Fig. 6*

*Fig. 7*

## EP 0 949 530 A1

**Office européen des brevets**

# RAPPORT DE RECHERCHE EUROPEENNE

Numéro de la demande

EP 99 40 0802

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 062 701 A (DRAZBA MARTIN J ET AL) 5 novembre 1991 * colonne 1, ligne 1 - ligne 38 * * colonne 6, ligne 67 - colonne 10 * --- | 1,5 | G02C7/04 |
| A | US 4 268 133 A (FISCHER DAVID J ET AL) 19 mai 1981 * colonne 5, ligne 41 - colonne 6, ligne 31 * --- | 1,5 | |
| A | EP 0 452 549 A (HEINRICH WOEHLK INST FUER CONT) 23 octobre 1991 * colonne 7, ligne 49 - colonne 8, ligne 7 * --- | 1,5 | |
| A | WO 93 03409 A (CAPRICORNIA CONTACT LENS) 18 février 1993 * page 1; revendications * --- | 1,5 | |
| A | US 4 310 225 A (DAVIS JOHN K) 12 janvier 1982 * abrégé * --- | 6 | DOMAINES TECHNIQUES RECHERCHES (Int.Cl.6) |
| A | "Hydrogel lenses for astigmatism" CONTACT LENS PRACTICE,1988, pages 659-679, XP002087185 * page 669 - page 677 * ----- | 1,5 | G02C |

Le présent rapport a été établi pour toutes les revendications

| Lieu de la recherche | Date d'achèvement de la recherche | Examinateur |
|---|---|---|
| LA HAYE | 28 juin 1999 | CALLEWAERT, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 99 40 0802

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-06-1999

| Document brevet cité au rapport de recherche | | Date de publication | Membre(s) de la famille de brevet(s) | | Date de publication |
|---|---|---|---|---|---|
| US 5062701 | A | 05-11-1991 | US | 4976533 A | 11-12-1990 |
| | | | AT | 112863 T | 15-10-1994 |
| | | | AU | 620886 B | 27-02-1992 |
| | | | AU | 3760389 A | 05-01-1990 |
| | | | CA | 1317802 A | 18-05-1993 |
| | | | DE | 68918762 D | 17-11-1994 |
| | | | DE | 68918762 T | 16-02-1995 |
| | | | DK | 288990 A | 05-12-1990 |
| | | | EP | 0346032 A | 13-12-1989 |
| | | | EP | 0426690 A | 15-05-1991 |
| | | | ES | 2060768 T | 01-12-1994 |
| | | | JP | 2685319 B | 03-12-1997 |
| | | | JP | 3502740 T | 20-06-1991 |
| | | | PH | 26412 A | 02-07-1992 |
| | | | TR | 23729 A | 01-09-1990 |
| | | | WO | 8912246 A | 14-12-1989 |
| US 4268133 | A | 19-05-1981 | JP | 55015192 A | 02-02-1980 |
| EP 0452549 | A | 23-10-1991 | DE | 4012478 A | 24-10-1991 |
| | | | AT | 89672 T | 15-06-1993 |
| | | | DK | 452549 T | 14-06-1993 |
| | | | US | 5100225 A | 31-03-1992 |
| WO 9303409 | A | 18-02-1993 | AU | 2422392 A | 02-03-1993 |
| | | | CA | 2115343 A | 18-02-1993 |
| | | | EP | 0597994 A | 25-05-1994 |
| | | | US | 5570143 A | 29-10-1996 |
| US 4310225 | A | 12-01-1982 | AUCUN | | |

EPO FORM P0460

Pour tout renseignement concernant cette annexe : voir Journal Officiel de l'Office européen des brevets, No.12/82